# EUROPÄISCHE PATENTANMELDUNG

(11) **EP 1 332 955 A2**
(43) Veröffentlichungstag der Anmeldung: **06.08.2003**
(21) Anmeldenummer: 03002007.7
(22) Anmeldetag: 28.01.2003
(51) Int. Cl.: B62D 65/00, B05B 15/04

(54) **Fördervorrichtung und Skidrahmen zum Fördern von Werkstücken**

(30) Priorität: 31.01.2002 DE 10203845
(71) Anmelder: Dürr Systems GmbH, 70435 Stuttgart (DE)
(72) Erfinder: Müller, Günther, 70499 Stuttgart (DE)
(74) Vertreter: Hoeger, Stellrecht & Partner

(57) **Zusammenfassung**

Um eine Fördervorrichtung zum Fördern von Werkstücken, insbesondere von Fahrzeugkarosserien, die jeweils auf einem Skidrahmen (100) mit Skidkufen (104) angeordnet sind, längs einer Förderrichtung, zu schaffen, bei welcher nur wenig oder gar kein Schmutz mit den Skidrahmen aus einem Bearbeitungsbereich in einen nachfolgenden Bearbeitungsbereich verschleppt wird, wird vorgeschlagen, daß die Fördervorrichtung eine Abdeckung (150) für mindestens eine der Skidkufen (104) umfaßt, die einen oberen Abdeckbereich (170) aufweist, welcher im Betriebszustand der Fördervorrichtung mindestens eine der Skidkufen (104) zumindest teilweise nach oben hin abdeckt.

## Beschreibung

Die vorliegende Erfindung betrifft eine Fördervorrichtung zum Fördern von Werkstücken, insbesondere von Fahrzeugkarosserien, die jeweils auf einem Skidrahmen mit Skidkufen angeordnet sind, längs einer Förderrichtung.

Solche Fördervorrichtungen zum Fördern von auf Skidrahmen angeordneten Werkstücken sind aus dem Stand der Technik bekannt.

Unter einem "Skidrahmen" ist dabei eine Transporteinrichtung für ein Werkstück zu versehen, die mindestens zwei Skidkufen umfaßt, welche längs der Förderrichtung der Werkstücke ausgerichtet und quer zur Förderrichtung der Werkstücke voneinander beabstandet sind, wobei jede Skidkufe eine Auflagefläche zum Abstützen des Skidrahmens an der Fördervorrichtung aufweist.

Dabei können die Skidkufen des Skidrahmens direkt an das Werkstück montiert werden, so daß das Werkstück selbst die Verbindung der Skidkufen untereinander übernimmt. Der Begriff "Skidrahmen", wie er in dieser Beschreibung und in den beigefügten Ansprüchen verwendet wird, umfaßt auch eine solche Konfiguration, bei welcher die Skidkufen direkt an das Werkstück montiert werden.

Skidrahmen werden insbesondere dazu benutzt, Fahrzeugkarosserien durch den Karosserie-Rohbau und/oder durch eine Lackieranlage zu fördern.

Beim Transport durch den Karosserie-Rohbau werden die Skidkufen durch Schleifstäube und Schweißrückstände stark verschmutzt. Beim Transport des Skidrahmens durch eine Lackieranlage werden die Skidkufen durch Lackvernebelung verschmutzt. Der auf den Skidkufen abgelagerte Schmutz wird in die auf den Karosserie-Rohbau bzw. auf die Lackieranlage folgenden Arbeitsbereiche verschleppt, was zu einem erheblichen Reinigungsaufwand führt.

Der vorliegenden Erfindung liegt daher die Aufgabe zugrunde, eine Fördervorrichtung zum Fördern von auf Skidrahmen angeordneten Werkstücken der eingangs genannten Art zu schaffen, bei welcher nur wenig oder gar kein Schmutz mit den Skidrahmen aus einem Bearbeitungsbereich in einen nachfolgenden Bearbeitungsbereich verschleppt wird.

Diese Aufgabe wird bei einer Fördervorrichtung mit den Merkmalen des Oberbegriffs von Anspruch 1 erfindungsgemäß dadurch gelöst, daß die Fördervorrichtung eine Abdeckung für mindestens eine der Skidkufen umfaßt, die einen oberen Abdeckbereich aufweist, welche im Betriebszustand der Fördervorrichtung mindestens eine der Skidkufen zumindest teilweise nach oben hin abdeckt.

Der erfindungsgemäßen Lösung liegt somit das Konzept zugrunde, die Skidkufe vor der Ablagerung von Schmutzteilchen zu schützen, welche ohne die erfindungsgemäß vorgesehene Abdeckung von einem oberhalb der Skidkufe angeordneten Bearbeitungsbereich zu der Skidkufe gelangen und sich dort ablagern könnten.

Wenn in dieser Beschreibung und in den beigefügten Ansprüchen davon die Rede ist, daß ein erstes Element ein zweites Element nach oben hin abdeckt, so ist dies so zu verstehen, daß das erste Element das zweite Element in der vertikalen Draufsicht von oben überdeckt.

Ist in der Beschreibung und den beigefügten Ansprüchen davon die Rede, daß ein erstes Element ein zweites Element zur Innenseite der Fördervorrichtung hin abdeckt, so ist dies so zu verstehen, daß das erste Element das zweite Element in einer Seitenansicht von einem Standpunkt in der Längsmittelebene der Fördervorrichtung aus und mit einer senkrecht zur Längsmittelebene der Fördervorrichtung gerichteten Blickrichtung überdeckt.

Ist in der Beschreibung oder den beigefügten Ansprüchen davon die Rede, daß ein erstes Element ein zweites Element zu der Außenseite der Fördervorrichtung hin abdeckt, so ist dies so zu verstehen, daß das erste Element das zweite Element in einer Seitenansicht von einem Standpunkt außerhalb der Fördervorrichtung aus und mit einer senkrecht zur Längsmittelebene der Fördervorrichtung zu der Längsmittelebene der Fördervorrichtung hin gerichteten Blickrichtung überdeckt.

Ein besonders guter Schutz gegenüber von einem oberhalb der Skidkufen angeordneten Bearbeitungsbereich stammenden Verunreinigungen ist gewährleistet, wenn der obere Abdeckbereich mindestens eine der Skidkufen vollständig nach oben hin abdeckt.

Bei einer bevorzugten Ausgestaltung der erfindungsgemäßen Fördervorrichtung ist vorgesehen, daß der obere Abdeckbereich im Betriebszustand der Fördervorrichtung gegenüber der Horizontalen, vorzugsweise um einen Winkel von ungefähr 20° bis ungefähr 40°, geneigt ist. Ein in dieser Weise geneigter oberer Abdeckbereich kann die Skidkufe sowohl nach oben hin als auch zur Innenseite und/oder zur Außenseite der Fördervorrichtung hin abdecken.

Ferner ist es von Vorteil, wenn sich der obere Abdeckbereich in einen Zwischenraum zwischen der Skidkufe und einer Traverse des Skidrahmens hineinerstreckt.

Unter einer Traverse des Skidrahmens ist dabei ein sich quer zu den Skidkufen erstreckendes Element des Skidrahmens zu verstehen, an welchem die Skidkufen über jeweils mindestens eine Stütze gehalten sind. In den Fällen, in denen die Skidkufen direkt an dem Werkstück angeordnet sind, bildet das Werkstück selbst eine Traverse des Skidrahmens.

Um zu verhindern, daß Schmutzpartikel von der Außenseite der Fördervorrichtung her zu den Skidkufen gelangen können, ist vorteilhafterweise vorgesehen, daß die Abdeckung einen äußeren Abdeckbereich aufweist, welcher mindestens eine der Skidkufen zumindest teilweise zur Außenseite der Fördervorrichtung hin abdeckt.

Besonders günstig ist es, wenn der äußere Abdeckbereich mindestens eine der Skidkufen zur Außenseite der Fördervorrichtung hin vollständig abdeckt.

Bei einer bevorzugten Ausgestaltung der Erfindung ist vorgesehen, daß der äußere Abdeckbereich im Betriebszustand der Fördervorrichtung im wesentlichen vertikal ausgerichtet ist.

Um zu vermeiden, daß Schmutzpartikel von der Innenseite der Fördervorrichtung her zu den Skidkufen gelangen können, ist vorteilhafterweise vorgesehen, daß die Abdeckung einen inneren Abdeckbereich aufweist, welcher mindestens eine der Skidkufen zumindest teilweise zur Innenseite der Fördervorrichtung hin abdeckt.

Insbesondere kann vorgesehen sein, daß die Abdeckung einen oberen inneren Abdeckbereich, welcher mit dem oberen Abdeckbereich verbunden ist, und einen unteren inneren Abdeckbereich, welcher von dem oberen inneren Abdeckbereich und dem oberen Abdeckbereich getrennt ist, aufweist.

In diesem Fall ist es günstig, wenn einer der inneren Abdeckbereiche den jeweils anderen der inneren Abdeckbereich zur Innenseite der Fördervorrichtung hin zumindest teilweise abdeckt. Bei dieser Ausgestaltung überlappen sich die inneren Abdeckbereiche zumindest teilweise, so daß zwischen den inneren Abdeckbereichen kein Spalt entsteht, durch welchen Schmutzpartikel in horizontaler Richtung zu der Skidkufe gelangen könnten.

Vorzugsweise ist vorgesehen, daß der obere innere Abdeckbereich den unteren inneren Abdeckbereich zur Innenseite der Fördervorrichtung hin zumindest teilweise abdeckt.

Ferner ist es günstig, wenn der obere Abdeckbereich den unteren inneren Abdeckbereich zumindest teilweise nach oben hin abdeckt.

Bei einer bevorzugten Ausgestaltung der Erfindung ist vorgesehen, daß mindestens einer der inneren Abdeckbereiche im Betriebszustand der Fördervorrichtung im wesentlichen vertikal ausgerichtet ist.

Besonders günstig ist es, wenn beide inneren Abdeckbereiche im Betriebszustand der Fördervorrichtung im wesentlichen vertikal ausgerichtet sind.

Bei einer bevorzugten Ausgestaltung der Erfindung umschließt die Abdeckung nur die Skidkufe und Teilabschnitte von Stützen, über welche die Skidkufe mit einer oder mehreren Traversen des Skidrahmens verbunden ist, und keine anderen Bestandteile des Skidrahmens und/oder des zu transportierenden Werkstücks. In diesem Fall weist die Abdeckung einen Durchlaß für den Durchtritt mindestens einer Stütze mindestens einer Skidkufe des Skidrahmens auf.

Um den Eintritt von Schmutzpartikeln durch den Durchlaß in den Innenraum der Abdeckung zu erschweren, ist es günstig, wenn der Durchlaß eine nach unten, vorzugsweise im wesentlichen vertikal nach unten, weisende Einlaßöffnung aufweist.

Unter einer nach unten weisenden Einlaßöffnung ist in der Beschreibung und in den beigefügten Ansprüchen eine Einlaßöffnung zu verstehen, deren mittlere Flächennormale nach unten weist, wobei die Orientierung der Flächennormale so gewählt ist, daß sie vom Innenraum der Abdeckung weg gerichtet ist.

Ferner ist es für die Vermeidung des Durchtritts von Schmutzpartikeln durch den Durchlaß günstig, wenn der Durchlaß im wesentlichen vertikal ausgerichtete Begrenzungswände aufweist.

Um die Zugänglichkeit zu den Bestandteilen der Fördervorrichtung zu gewährleisten, mit denen die Skidkufen in Kontakt kommen, ist vorzugsweise vorgesehen, daß zumindest der obere Abdeckbereich der Abdeckung aus einer Arbeitsstellung, in welcher der obere Abdeckbereich mindestens eine der Skidkufen nach oben hin zumindest teilweise abdeckt, in eine Wartungsstellung bewegbar ist, in welcher der Förderweg der mindestens einen Skidkufe zugänglich ist.

Unter dem Förderweg einer Skidkufe ist dabei der Raumbereich zu verstehen, welcher von der Skidkufe überstrichen wird, während der Skidrahmen längs der Förderrichtung gefördert wird.

Dabei kann der obere Abdeckbereich der Abdeckung beispielsweise durch eine lineare Bewegung von der Arbeitsstellung in die Wartungsstellung bewegt werden.

Bei einer bevorzugten Ausgestaltung der Erfindung ist jedoch vorgesehen, daß der obere Abdeckbereich aus der Arbeitsstellung in die Wartungsstellung schwenkbar ist.

Insbesondere kann vorgesehen sein, daß der obere Abdeckbereich um eine im wesentlichen parallel zu der Förderrichtung gerichtete Schwenkachse aus der Arbeitsstellung in die Wartungsstellung schwenkbar ist.

Die erfindungsgemäß vorgesehene Abdeckung für die Skidkufe eignet sich insbesondere zur Verwendung bei einer Fördervorrichtung, die als eine Rollenbahn, als ein Tragkettenförderer oder als ein Schleppkettenförderer ausgebildet ist.

Durch die erfindungsgemäße Fördervorrichtung wird der zur Reinigung der Skidkufen erforderliche Aufwand reduziert. Ferner tritt eine Qualitätssteigerung der geförderten Werkstücke ein, da weniger Schmutz von einem Bearbeitungsbereich in den nächsten verschleppt wird. Hierdurch wird auch das Ausmaß sonst erforderlicher Nacharbeiten deutlich reduziert.

Die vorliegende Erfindung betrifft ferner einen Skidrahmen zum Fördern von Werkstücken, insbesondere Fahrzeugkarosserien, der mindestens zwei Skidkufen, die quer zur Förderrichtung von einander beabstandet sind, und mindestens eine Traverse, die über jeweils eine Stütze mit den Skidkufen verbunden ist, umfaßt, wobei die Stütze an einem Festlegebereich an der jeweiligen Skidkufe festgelegt ist.

Solche Skidrahmen sind, wie bereits vorstehend ausgeführt, aus dem Stand der Technik bekannt.

Die Traverse, die über jeweils eine Stütze mit den Skidkufen verbunden ist, kann dabei insbesondere durch das Werkstück selbst gebildet sein.

Bei den bekannten Skidrahmen erstreckt sich die Stütze, über die die Skidkufe mit der Traverse verbunden ist, von dem Festlegebereich der Stütze aus nach oben zu der jeweiligen Traverse.

Soll ein solcher Skidrahmen in einer Fördervorrichtung verwendet werden, welche eine Abdeckung zum Schutz der Skidkufen vor Verschmutzung aufweist, so muß diese Abdeckung einen Durchlaß für den Durchtritt der Stütze aufweisen, dessen Einlaßöffnung eine horizontale oder nach oben gerichtete mittlere Flächennormale aufweist. Aufgrund dieser Ausrichtung der Einlaßöffnung des Durchlasses besteht eine erhebliche Gefahr, daß Schmutzpartikel von oberhalb der Abdeckung durch den Durchlaß in den Innenraum der Abdeckung gelangen können.

Der vorliegenden Erfindung liegt daher die weitere Aufgabe zugrunde, einen Skidrahmen der vorgehend genannten Art zu schaffen, welcher in einer Fördervorrichtung verwendet werden kann, die eine Abdeckung für mindestens eine Skidkufe mit einem Durchlaß für den Durchtritt einer Stütze der Skidkufe umfaßt, dessen Einlaßöffnung eine nach unten gerichtete mittlere Flächennormale aufweist.

Diese Aufgabe wird bei einem Skidrahmen mit den Merkmalen des Oberbegriffs von Anspruch 21 erfindungsgemäß dadurch gelöst, daß die Stütze einen nach oben offenen bogenförmigen Abschnitt umfaßt.

Der bogenförmige Abschnitt weist insbesondere einen Schenkel auf, der sich von einem der Skidkufe zugewandten Ende des bogenförmigen Abschnitts nach unten, vorzugsweise vertikal nach unten, erstreckt.

Der nach oben offene bogenförmige Abschnitt kann insbesondere einen Querschnitt in Form eines nach oben offenen U aufweisen.

Die erfindungsgemäße Ausgestaltung der Stütze des Skidrahmens ermöglicht es, die Skidkufenabdeckung der Fördervorrichtung so zu gestalten, daß sie einen Durchlaß mit einer Einlaßöffnung, deren mittlere Flächennormale nach unten gerichtet ist, aufweist, welcher von einem der Schenkel des nach oben offenen bogenförmigen Abschnitts durchsetzt wird.

Sämtliche Angaben in dieser Beschreibung und den beigefügten Ansprüchen, welche die Anordnung oder Ausrichtung von Elementen des Skidrahmens betreffen, beziehen sich auf eine Standardstellung des Skidrahmens, in welcher die Skidkufen horizontal und nebeneinander angeordnet sind und die Traverse oberhalb der Skidkufen angeordnet ist.

Besonders günstig ist es, wenn die Stütze einen schwanenhalsförmigen Abschnitt umfaßt.

Insbesondere kann der nach oben offene bogenförmige Abschnitt einen Teilabschnitt des schwanenhalsförmigen Abschnitts der Stütze bilden.

Ferner ist es von Vorteil, wenn die Stütze mindestens einen Abschnitt umfaßt, der unterhalb des Festlegebereichs der Stütze angeordnet ist. Der Durchlaß in der Abdeckung der Fördervorrichtung kann dann so gelegt werden, daß er von dem unterhalb des Festlegebereichs der Stütze angeordneten Abschnitt der Stütze durchsetzt wird. Dadurch ist gewährleistet, daß sich Schmutzteilchen von außerhalb der Abdeckung durch den Durchlaß nach oben bewegen müssen, um zu dem Festlegebereich der Stütze zu gelangen, so daß der an dem Festlegebereich der Stütze angrenzende Teilbereich der jeweiligen Skidkufe besser vor Verschmutzung geschützt ist.

Bei einer bevorzugten Ausgestaltung des erfindungsgemäßen Skidrahmens ist vorgesehen, daß die Stütze an einer Oberseite der jeweiligen Skidkufe festgelegt ist.

Um die Fördervorrichtung für den Skidrahmen mit einem in einen Zwischenraum zwischen der Skidkufe und der Stütze sich hineinerstreckenden Bereich versehen zu können, ist es von Vorteil, wenn die Stütze einen sich von dem Festlegebereich aus quer zur Vertikalen, vorzugsweise im wesentlichen horizontal, erstreckenden äußeren Abschnitt umfaßt.

Ferner ist es von Vorteil, wenn die Stütze einen sich von der Traverse quer zur Horizontalen, vorzugsweise im wesentlichen vertikal, erstreckenden inneren Abschnitt umfaßt.

Bei einer bevorzugten Ausgestaltung der Erfindung ist ferner vorgesehen, daß die Stütze einen zwischen dem Festlegebereich und dem inneren Abschnitt der Stütze angeordneten, sich quer zur Horizontalen, vorzugsweise im wesentlichen vertikal, erstreckenden mittleren Abschnitt umfaßt.

Der Durchlaß der Skidkufenabdeckung der Fördervorrichtung wird vorzugsweise so angeordnet, daß er von diesem mittleren Abschnitt der Stütze durchsetzt wird.

Ferner umfaßt die Stütze vorzugsweise einen zwischen dem Festlegebereich und dem inneren Abschnitt angeordneten, sich quer zur Vertikalen, vorzugsweise im wesentlichen horizontal erstreckenden und unterhalb des Festlegebereichs angeordneten unteren Abschnitt.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Querschnitt durch einen Skidrahmen;
- Fig. 2: eine schematische Draufsicht von oben auf den Skidrahmen aus Fig. 1;
- Fig. 3: eine schematische Seitenansicht auf den Skidrahmen aus den Fig. 1 und 2;
- Fig. 4: einen ausschnittsweisen schematischen Querschnitt durch eine als Rollenbahn ausgebildete Fördervorrichtung mit einem daran angeordneten Skidrahmen;
- Fig. 5: eine schematische Seitenansicht der Rollenbahn aus Fig. 4, mit der Blickrichtung in Richtung des Pfeiles 5 in Fig. 4;
- Fig. 6: einen ausschnittsweisen schematischen Querschnitt durch eine als Tragkettenförderer ausgebildete Fördervorrichtung mit einem daran angeordneten Skidrahmen;
- Fig. 7: eine schematische Seitenansicht des Tragkettenförderers aus Fig. 6, mit der Blickrichtung in Richtung des Pfeiles 7 in Fig. 6;
- Fig. 8: einen ausschnittsweisen schematischen Querschnitt durch eine als Schleppkettenförderer ausgebildete Fördervorrichtung mit einem daran angeordneten Skidrahmen; und
- Fig. 9: eine schematische Seitenansicht des Schleppkettenförderers aus Fig. 8, mit der Blickrichtung in Richtung des Pfeiles 9 in Fig. 8.

Gleiche oder funktional äquivalente Elemente sind in allen Figuren mit denselben Bezugszeichen bezeichnet.

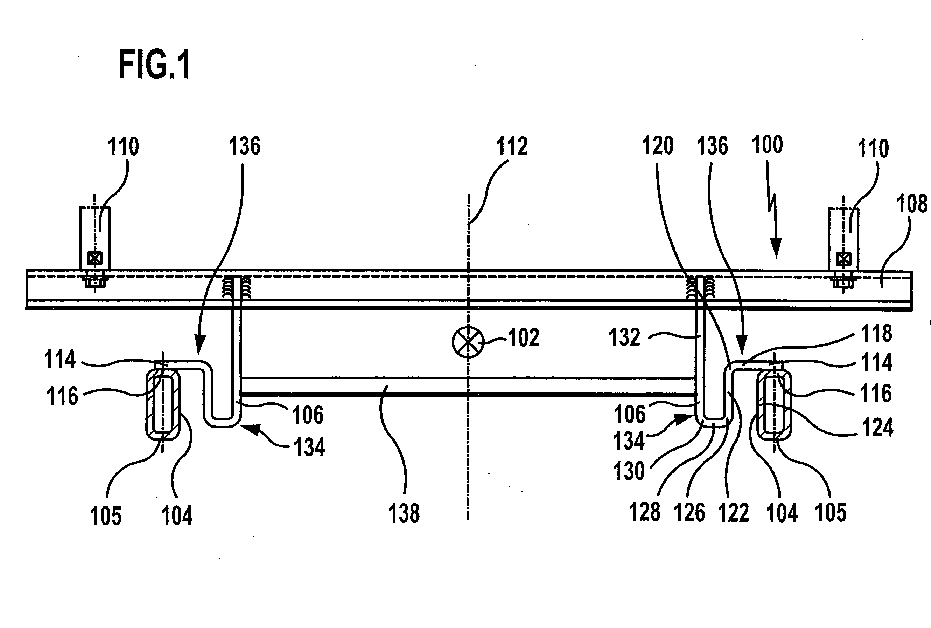

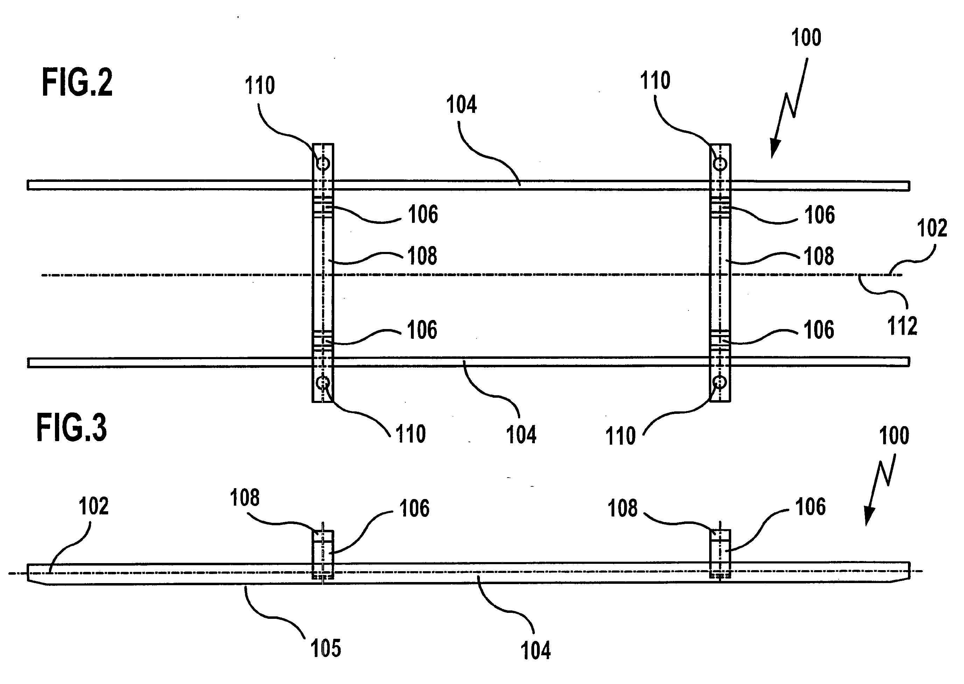

Ein in den Fig. 1 bis 3 dargestellter, als Ganzes mit 100 bezeichneter Skidrahmen zur Aufnahme eines zu transportierenden Gegenstands, insbesondere einer Fahrzeugkarosserie, umfaßt zwei parallel zu einer Längsrichtung 102 ausgerichtete, senkrecht zur Längsrichtung 102 voneinander beabstandete Skidkufen 104, welche als im wesentlichen rechteckige Hohlprofile ausgebildet sind und an ihrer Unterseite eine im wesentlichen horizontale Auflagefläche 105 aufweisen. Jede der Skidkufen 104 ist über jeweils eine Stütze 106 mit zwei Traversen 108 (siehe Fig. 2 und 3) verbunden, welche sich senkrecht zur Längsrichtung 102 über die beiden Skidkufen 104 hinweg erstrecken und längs der Längsrichtung 102 voneinander beabstandet sind.

Die Traversen 108 tragen jeweils zwei Halteeinrichtungen 110 zum lösbaren Festlegen der zu transportierenden Gegenstände, insbesondere einer zu transportierenden Fahrzeugkarosserie, an dem Skidrahmen 100.

Der Skidrahmen 100 ist im wesentlichen spiegelsymmetrisch zu seiner Längsmittelebene 112 ausgebildet.

Im folgenden werden der die Längsmittelebene 112 des Skidrahmens 100 zugewandten Seiten der beschriebenen Elemente als deren Innenseiten oder innere Seiten bezeichnet werden, während die der Längsmittelebene 112 abgewandten Seiten dieser Elemente als deren Außenseiten oder äußere Seiten bezeichnet werden.

Wie am besten aus Fig. 1 zu ersehen ist, umfaßt jede der Stützen 106 einen Festlegebereich 114, der an der der Auflagefläche 105 der jeweiligen Skidkufe 104 gegenüberliegenden Oberseite 116 der Skidkufe 104, vorzugsweise durch Verschweißen, festgelegt ist.

Vom dem Festlegebereich 114 der Stütze 106 aus erstreckt sich ein äußerer Abschnitt 118 der Stütze 106 horizontal nach innen, d.h. in Richtung auf die Längsmittelebene 112 des Skidrahmens 100.

An diesen horizontalen äußeren Abschnitt 118 schließ sich längs einer parallel zur Längsrichtung 101 verlaufenden Biegelinie 120 ein sich vertikal nach unten erstreckender mittlerer Abschnitt 122 der Stütze 106 an, welcher parallel zur Innenseite 124 der Skidkufe 104 im Abstand von derselben angeordnet ist.

An das untere Ende des mittleren Abschnitts 122 schließt sich längs einer Biegelinie 126 ein sich horizontal nach innen erstreckender unterer Abschnitt 128 der Stütze 106 an.

Der untere Abschnitt 126 geht an einer Biegelinie 130 in einen inneren Abschnitt 132 der Stütze 106 über, welcher sich vertikal nach oben bis zu der Traverse 108 erstreckt.

Der innere Abschnitt 132 der Stütze 106 ist parallel zu dem mittleren Abschnitt 122 und von demselben beabstandet angeordnet.

Das obere Ende des inneren Abschnitts 132 ist an der jeweils zugeordneten Traverse 108, vorzugsweise durch Verschweißen, festgelegt.

Der untere Bereich des inneren Abschnitts 132, der untere Abschnitt 128 und der mittlere Abschnitt 122 der Stütze 106 bilden zusammen einen nach oben hin offenen bogenförmigen Abschnitt 134 der Stütze 106.

Der bogenförmige Abschnitt 134 der Stütze 106 bildet zusammen mit dem äußeren Abschnitt 118 der Stütze 106 einen schwanenhalsförmigen Abschnitt 136 der Stütze 106.

Zur Erhöhung der Verwindungssteifigkeit des Skidrahmens 100 sind die unteren Bereiche der inneren Abschnitte 132 der beiden Stützen 106, welche jeweils an derselben Traverse 108 festgelegt sind, mittels einer sich senkrecht zur Längsrichtung 102 erstreckenden Querstrebe 138 miteinander verbunden, welche an ihren beiden Enden an jeweils einer Stütze 106, vorzugsweise durch Verschweißen, festgelegt ist.

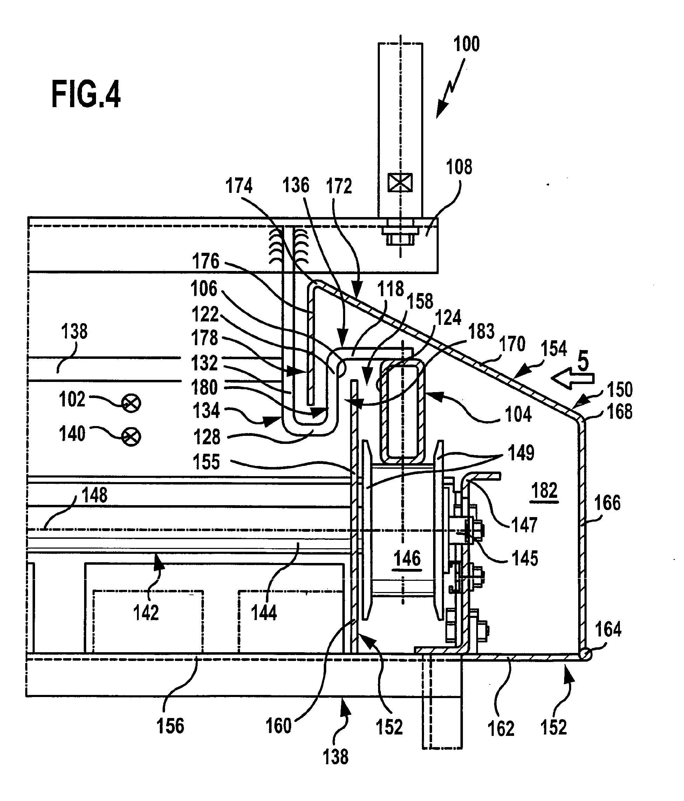

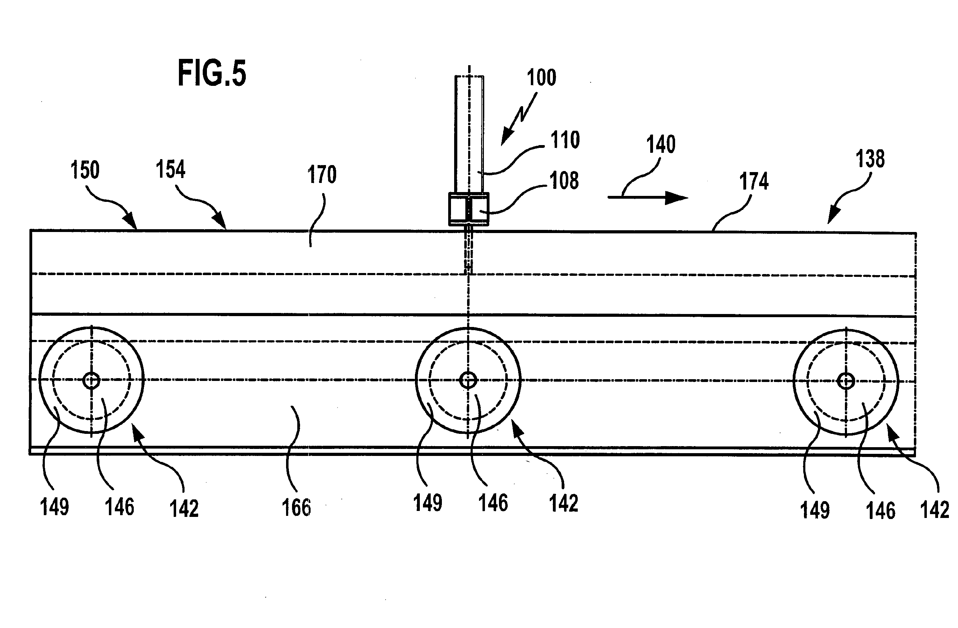

Die Fig. 4 und 5 zeigen die Anordnung des vorstehend beschriebenen Skidrahmens 100 an einer als Rollenbahn 138 ausgebildeten Fördervorrichtung, welche längs einer Förderrichtung 140 aufeinanderfolgende, senkrecht zur Förderrichtung 140 ausgerichtete und längs der Förderrichtung 140 voneinander beabstandete Tragrollen 142 umfaßt.

In Fig. 4 ist von der Rollenbahn 138 nur deren rechte Hälfte dargestellt.

Jede der Tragrollen 142 umfaßt eine horizontal und senkrecht zur Förderrichtung 140 ausgerichtete Welle 144, welche an ihren beiden Enden mittels Lagereinrichtungen 145 an sich längs der Förderrichtung 140 erstreckenden Gestellrahmenträgern 147, welche beispielsweise einen im wesentlichen Z-förmigen Querschnitt aufweisen können, drehbar gelagert ist.

Auf der Welle sind zwei zylindrische Tragkörper 146 drehfest mit der Welle 144 angeordnet, welche jeweils eine der Skidkufen 104 des Skidrahmens 100 tragen und durch ihre Drehung um die Drehachse 148 der Tragrolle 142 - aufgrund der Reibung zwischen der Mantelfläche der Tragkörper 146 einerseits und der Auflagefläche 105 der Skidkufen 104 andererseits - längs der Förderrichtung 140 bewegen.

An der Innenseite und/oder an der Außenseite jedes Tragkörpers 146 kann ein Spurkranz 149 zur seitlichen Führung der jeweiligen Skidkufe 104 vorgesehen sein.

Die Drehbewegung der Tragrolle 142 wird dabei mittels eines drehfest mit der Welle 144 verbundenen (nicht dargestellten) Ritzels erzeugt, welches über einen Zahnriemen mit der Abtriebswelle eines Antriebsmotors oder mit einem Ritzel einer anderen Tragrolle 142, welche ihrerseits von dem Antriebsmotor oder von einer anderen Tragrolle 142 angetrieben wird, in Wirkverbindung steht.

Um die Skidkufen 104 des Skidrahmens 100 vor Verschmutzung zu schützen, umfaßt die Rollenbahn 138 eine Abdeckung 150, welche ihrerseits einen stationären Teil 152 und einen schwenkbaren Teil 154 umfaßt.

Der stationäre Teil 152 der Abdeckung 150 umfaßt eine Abdeckplatte 155, welche sich von einer Bodenplatte 156 der Rollenbahn 138 aus vertikal nach oben in den Zwischenraum 158 zwischen der Innenseite 124 der Skidkufe 104 und dem mittleren Abschnitt 122 der Stütze 106 hinein erstreckt und im Abstand von dem äußeren Abschnitt 118 der Stütze 106 endet. Diese Abdeckplatte 155 ist nahe der Innenseite (d.h., nahe der der Längsmittelebene der Rollenbahn 138 zugewandten Seite) der Tragkörper 146 der Tragrollen 142 angeordnet und weist Durchgangsöffnungen für den Durchtritt der Wellen 144 durch die Abdeckplatte 155 auf.

Die Abdeckplatte 155 bildet einen unteren inneren Abdeckbereich 160 der Abdeckung 150.

Ferner umfaßt der stationäre Teil 152 der Abdeckung 150 eine Trageplatte 162, welche sich von der Bodenplatte 156 aus in horizontaler Richtung nach außen erstreckt.

Am äußeren Rand der Trageplatte 162 ist mittels eines Scharniers 164 der schwenkbare Teil 154 der Abdeckung 150 um eine parallel zur Förderrichtung 140 verlaufende Schwenkachse schwenkbar an der Trageplatte 162 gehalten.

Der schwenkbare Teil 154 der Abdeckung 150 umfaßt einen äußeren Abdeckbereich 166, welcher sich (in der in den Fig. 4 und 5 dargestellten Arbeitsstellung, in welcher der schwenkbare Teil 154 der Abdeckung 150 die jeweils zugeordnete Skidkufe 104 abdeckt) sich von dem Scharnier 164 aus vertikal nach oben bis ungefähr in die Höhe der Mitte der Skidkufe 104 erstreckt.

An den oberen Rand des äußeren Abdeckbereichs 166 schließt sich längs einer Biegelinie 168 ein oberer Abdeckbereich 170 an, welcher unter einem Winkel von beispielsweise ungefähr 30° gegen die Horizontale nach innen ansteigt und sich über die Skidkufe 104 hinweg erstreckt. Der obere Bereich des oberen Abdeckbereichs 170 erstreckt sich in den Zwischenraum 172 zwischen der Traverse 108 des Skidrahmens 100 und dem äußeren Abschnitt 118 der Stütze 106 hinein und endet im Abstand von der Unterseite der Traverse 108.

An den inneren Rand des oberen Abdeckbereichs 170 schließt sich längs einer Biegelinie 174 ein oberer innerer Abdeckbereich 176 an, welcher sich vertikal nach unten in den Zwischenraum 178 zwischen dem inneren Abschnitt 132 und dem mittleren Abschnitt 122 der Stütze 106 hinein erstreckt, wobei der untere Rand des oberen inneren Abdeckbereichs 176 von dem unteren Abschnitt 128 der Stütze 106 beabstandet ist.

Der untere Rand des oberen inneren Abdeckbereichs 176 liegt unterhalb des oberen Randes des unteren inneren Abdeckbereichs 160, so daß der obere innere Abdeckbereich 176 den unteren inneren Abdeckbereich 160 zur Innenseite der Rollenbahn 138 hin abdeckt.

Zwischen dem unteren Ende des oberen inneren Abdeckbereichs 176 und dem oberen Ende des unteren inneren Abdeckbereichs 160 ist ein Durchlaß 180 für die Stütze 106 mit vertikalen Begrenzungswänden ausgebildet, welcher von dem mittleren Abschnitt 122 der Stütze 106 durchsetzt wird.

Die vorstehend beschriebenen Bestandteile der Abdeckung 150 bilden zusammen einen geschlossenen Kanal, welcher nur über den Durchlaß 180 zugänglich ist, dessen Einlaßöffnung 183 nach unten weist, so daß Schmutzpartikel nur in der Richtung von unten nach oben in den von der Abdeckung 150 umschlossenen Innenraum 182 gelangen können. Da die Bearbeitung und/oder Oberflächenbehandlung des an dem Skidrahmen 100 gehaltenen Gegenstands oberhalb der Abdeckung 150 stattfindet, gelangen die durch die Bearbeitung oder Oberflächenbehandlung entstehenden Schmutzpartikei von oben zur Abdeckung 150, so daß es sehr unwahrscheinlich ist, daß solche Schmutzpartikel in den Bereich unterhalb des Durchlasses 180 gelangen und dann nach oben durch den Durchlaß 180 in den Innenraum 182 der Abdeckung 150 eindringen können.

Die im Innenraum der Abdeckung 150 angeordnete Skidkufe 104 und die im Innenraum 182 angeordneten Bestandteile der Tragrollen 142, insbesondere die Tragkörper 146, die Spurkränze 149 und die Lagereinrichtungen 145, sind somit zuverlässig vor einer Verschmutzung geschützt.

Um Wartungsarbeiten an den innerhalb der Abdeckung 150 angeordneten Bestandteilen der Rollenbahn 138 durchführen zu können, kann der schwenkbare Teil 154 der Abdeckung 150 - in Abwesenheit des Skidrahmens 100 - aus der in Fig. 4 dargestellten Arbeitsstellung um die Schwenkachse des Scharniers 164 in eine (nicht dargestellte) Wartungsstellung geschwenkt werden, in welcher der Innenraum 182 der Abdeckung 150 von oben her zugänglich ist.

In der in den Fig. 4 und 5 dargestellten Arbeitsstellung der Abdeckung 150 deckt der obere innere Abdeckbereich 176 den oberen Bereich der Skidkufe 104 zur Innenseite der Rollenbahn 138 hin ab, während der obere Abdeckbereich 170 die Skidkufe 104 nach oben hin und den oberen Bereich der Skidkufe 104 zur Außenseite der Rollenbahn 138 hin abdeckt. Der äußere Abdeckbereich 166 deckt den unteren Bereich der Skidkufe 104 zur Außenseite der Rollenbahn 138 hin ab, während der untere innere Abdeckbereich 160 den unteren Bereich der Skidkufe 104 zur Innenseite der Rollenbahn 138 hin abdeckt.

Auf der in Fig. 4 nicht dargestellten linken Seite der Rollenbahn 138 ist eine im wesentlichen spiegelsymmetrisch zur Abdeckung 150 ausgebildete weitere Abdeckung für die linke Skidkufe 104 vorgesehen.

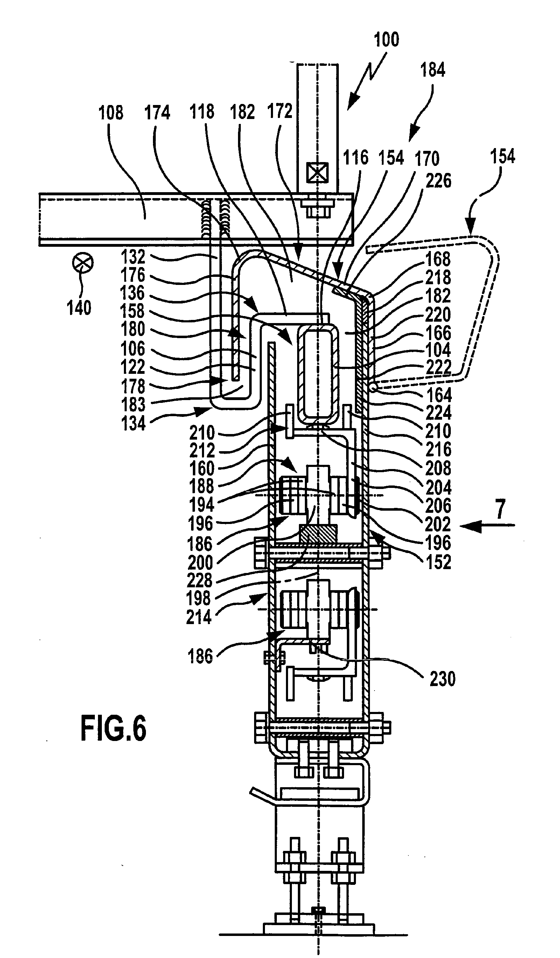

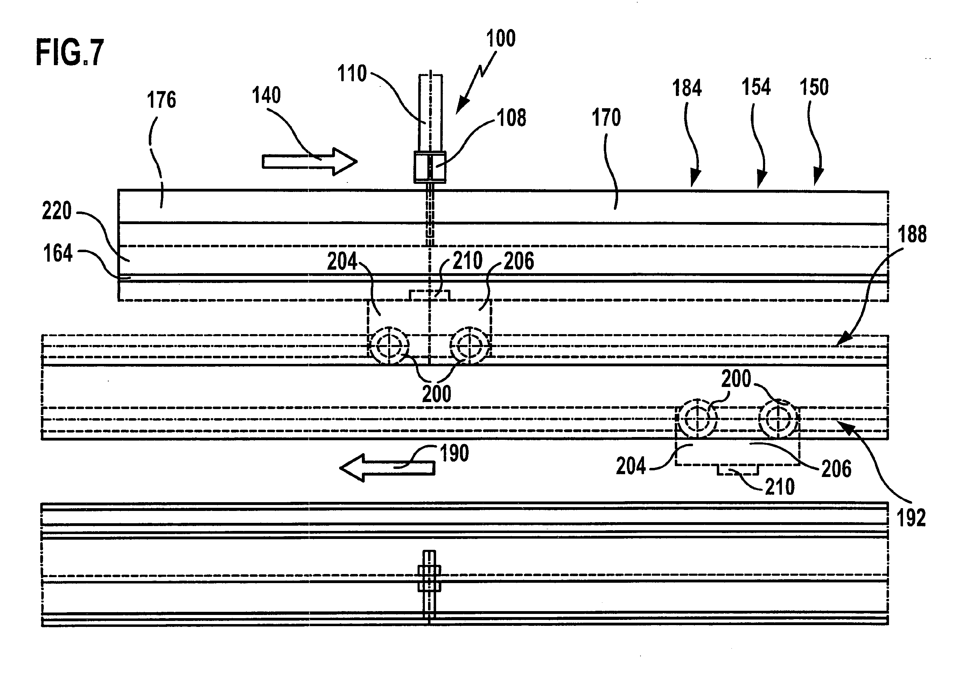

Eine in den Fig. 6 und 7 dargestellte zweite Ausführungsform einer Fördervorrichtung unterscheidet sich von der vorstehend beschriebenen ersten Ausführungsform dadurch, daß die Fördervorrichtung nicht als Rollenbahn, sondern als Tragkettenförderer 184 ausgebildet ist.

Der Tragkettenförderer 184 umfaßt als Fördermittel zu beiden Seiten seiner Längsmittelebene jeweils eine Förderkette 186, welche jeweils ein sich in der Förderrichtung 140 bewegendes oberes Trum 188 und ein sich in der zu der Förderrichtung 140 entgegengesetzten Rücklaufrichtung 190 bewegendes unteres Trum 192 aufweist. Das Obertrum 188 und das Untertrum 192 sind an ihren (nicht dargestellten) Enden miteinander verbunden, so daß sich eine endlose, umlaufende Förderkette 186 ergibt.

Die Förderkette 186 ist aus in ihrer Längsrichtung aufeinanderfolgenden innenliegenden Kettenlaschen 194 und außenliegenden Kettenlaschen 196 zusammengesetzt, welche einander symmetrisch zu einer Längsmittelebene 198 der Förderkette 186 gegenüberliegen.

An solchen Kettenlaschenpaaren sind Tragrollen 200 der Kette mittels jeweils eines Lagerbolzens 202 drehbar gelagert.

Wie aus Fig. 6 und 7 zu ersehen ist, sind jeweils zwei Tragrollen 200 einem Mitnehmer 204 zugeordnet, welcher als eine Winkelplatte mit einem vertikalen Abschnitt 206 und einem horizontalen Abschnitt 208 ausgebildet ist, wobei der horizontale Abschnitt 208 zusammen mit zwei an seiner Oberseite angeordneten, sich in der Längsrichtung der Förderkette 186 erstreckenden und senkrecht zur Längsrichtung der Förderkette 186 voneinander beabstandeten, vertikalen Führungsplatten 210 eine Aufnahme 212 für die Skidkufe 104 eines mittels des Tragkettenförderers 184 zu transportierenden Skidrahmens 100 bildet.

Das obere Trum 188 und das untere Trum 192 der Förderkette 186 laufen durch ein im Querschnitt im wesentlichen rechteckiges Kettengehäuse 214, dessen der Längsmittelebene des Tragkettenförderers 184 zugewandte Innenwand einen unteren inneren Abdeckbereich 160 für die Skidkufe 104 bildet, welcher sich in den Zwischenraum 158 zwischen der Innenseite 124 der Skidkufe 104 und dem mittleren Abschnitt 122 der Stütze 106 hinerstreckt und unterhalb der Oberseite 116 der Skidkufe 104 endet.

Eine Außenwand des Kettengehäuses 214 bildet einen stationären unteren äußeren Abdeckbereich 216, welcher sich vertikal nach oben bis über die Oberseite 116 der Skidkufe 104 hinaus erstreckt und an seinem oberen Ende eine sich längs der Förderrichtung 140 erstreckende Leiste 218 aus einem elastischen Material, beispielsweise aus Gummi, trägt.

An der Außenseite des unteren äußeren Abdeckbereichs 216 ist ein Scharnier 164 angeordnet, um dessen längs der Förderrichtung 140 verlaufende Schwenkachse der schwenkbare Teil 154 der Abdeckung 150 der Skidkufe 104 schwenkbar an dem unteren äußeren Abdeckbereich 216 gehalten ist.

Der schwenkbare Teil 154 der Abdeckung 150 umfaßt einen oberen äußeren Abdeckbereich 220, der sich in der in Fig. 6 in durchgezogenen Linien dargestellten Arbeitsstellung der Abdeckung 150 von dem Scharnier 164 aus vertikal nach oben bis zu dem oberen Rand der Leiste 218 erstreckt.

An den oberen Rand des oberen äußeren Abdeckbereichs 220 schließt sich längs einer Biegelinie 168 ein oberer Abdeckbereich 170 an, welcher zur Innenseite des Tragkettenförderers 184 hin unter einem Winkel von beispielsweise ungefähr 30° gegen die Horizontale ansteigt und sich in den Zwischenraum 172 zwischen dem äußeren Abschnitt 118 der Stütze 106 und der Unterseite der Traverse 108 des Skidrahmens 100 hinein erstreckt.

An den inneren Rand des oberen Abdeckbereichs 170 schließt sich längs einer Biegelinie 174 ein oberer innerer Abdeckbereich 176 an, welcher sich vertikal nach unten in den Zwischenraum 178 zwischen dem mittleren Abschnitt 122 und dem inneren Abschnitt 132 der Stütze 106 hinein erstreckt.

Der untere Rand des oberen inneren Abdeckbereichs 176 liegt unterhalb des oberen Randes des unteren inneren Abdeckbereichs 160, so daß zwischen dem unteren Bereich des oberen inneren Abdeckbereichs 176 und dem oberen Bereichs des unteren inneren Abdeckbereichs 160 ein in den Innenraum 182 der Abdeckung 150 führender Durchlaß 180 mit vertikalen Begrenzungswänden ausgebildet ist, dessen Einlaßöffnung 183 nach unten weist.

Ferner umfaßt die Abdeckung 150 ein Abstützelement 122 für den schwenkbaren Teil 154 der Abdeckung 150, welches einen vertikalen unteren Abschnitt 224 umfaßt, der an der Innenseite des unteren äußeren Abdeckbereichs 216 festgelegt ist, und einen oberen Abschnitt 226 umfaßt, der unter im wesentlichen demselben Winkel gegen die Horizontale geneigt ist wie der obere Abdeckbereich 170 des schwenkbaren Teils 154 der Abdeckung 150. In der Arbeitsstellung des schwenkbaren Teils 154 der Abdeckung 150 liegt daher der obere Abdeckbereich 170 mit seiner Unterseite auf der Oberseite des oberen Abschnitts 226 des Abstützelements 220 auf, so daß das Abstützelement 222 den schwenkbaren Teil 154 der Abdeckung 150 in der Arbeitsstellung abstützt.

Der stationäre Teil 152 der Abdeckung 150 wird durch den unteren inneren Abdeckbereich 160 und den unteren äußeren Abdeckbereich 216 sowie das Abstützelement 122 gebildet.

Der stationäre Teil 152 und der schwenkbare Teil 154 der Abdeckung 150 umschließen in der Arbeitsstellung der Abdeckung 150 den Innenraum 182, in dem sowohl die Skidkufe 104 als auch die beweglichen Elemente des Tragkettenförderers 184, nämlich die Förderkette 186, angeordnet und somit vor Verschmutzung geschützt sind.

Um die Förderkette 186 für Wartungszwecke zugänglich zu machen, kann der schwenkbare Teil 154 der Abdeckung 150 um die Schwenkachse des Scharniers 164 in die in Fig. 6 in gebrochenen Linien dargestellte Wartungsstellung geschwenkt werden, in welcher der Innenraum 182 von oben her zugänglich ist.

Beim Zurückschwenken des schwenkbaren Teils 154 der Abdeckung 150 aus der Wartungsstellung in die Arbeitsstellung dämpft die Leiste 218 aus elastischem Material den Stoß beim Auftreffen des schwenkbaren Teils 154 auf den stationären Teil 152 der Abdeckung 150. Ferner bildet der obere Abschnitt 226 des Abstützelements 222 einen Anschlag für den schwenkbaren Teil 154 der Abdeckung 150.

In der Arbeitsstellung der Abdeckung 150 deckt der obere innere Abdeckbereich 176 den oberen Bereich der Skidkufe 104 zur Innenseite des Tragkettenförderers 184 hin ab. Der obere Abdeckbereich 170 deckt die Skidkufe 104 nach oben hin ab. Der obere äußere Abdeckbereich 166 deckt den oberen Bereich der Skidkufe 104 zur Außenseite des Tragkettenförderers 184 hin ab. Der untere äußere Abdeckbereich 216 deckt die Skidkufe 104 zur Außenseite des Tragkettenförderers 184 hin ab. Der untere innere Abdeckbereich 160 deckt den unteren Bereich der Skidkufe 104 zur Innenseite des Tragkettenförderers 184 hin ab.

Ferner deckt der untere Bereich des oberen inneren Abdeckbereichs 176 den oberen Bereich des unteren inneren Abdeckbereichs 160 zur Innenseite des Tragkettenförderers 184 hin ab.

Die Tragrollen 200 der Förderkette 186 rollen auf Laufschienen 228 und 230 für das obere Trum 188 bzw. für das untere Trum 192 ab, welche innerhalb des Kettengehäuses 214 angeordnet sind und sich parallel zur Förderrichtung 140 bzw. zur Rücklaufrichtung 190 erstrecken.

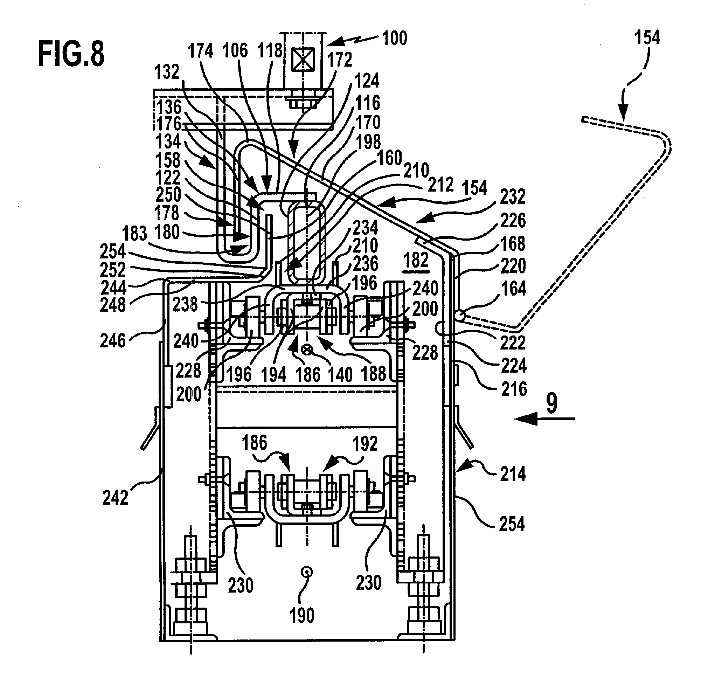

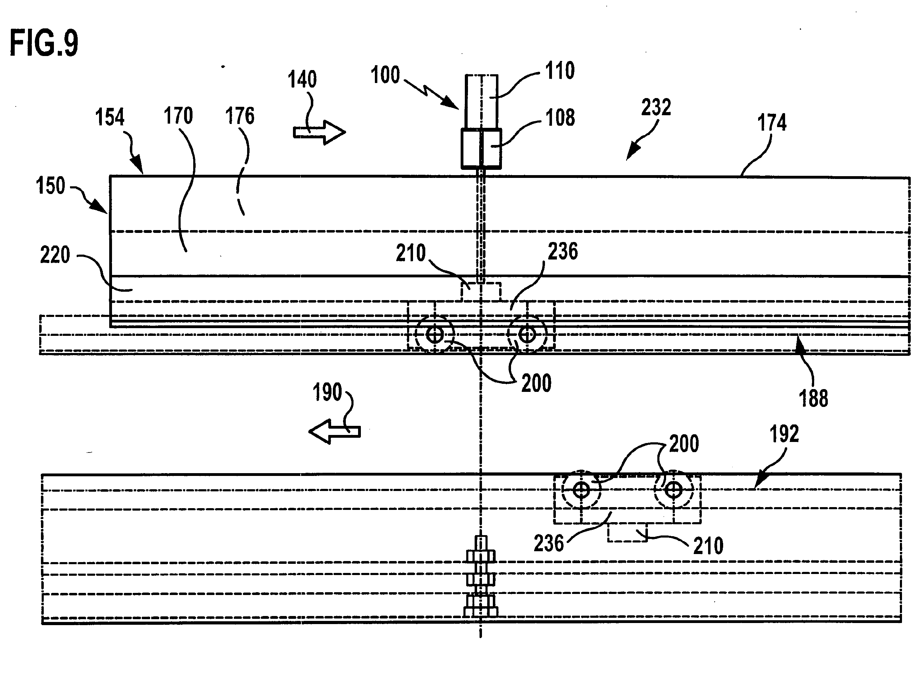

Eine in den Fig. 8 und 9 dargestellte dritte Ausführungsform einer Fördervorrichtung unterscheidet sich von den vorstehend beschriebenen Ausführungsformen dadurch, daß die Fördervorrichtung als ein Schleppkettenförderer 232 ausgebildet ist.

Wie aus Fig. 8 zu ersehen ist, umfaßt der Schleppkettenförderer als Fördermittel zu beiden Seiten seiner Längsmittelebene jeweils eine Förderkette 186 mit einem oberen Trum 188, welches sich längs der Förderrichtung 140 bewegt, und einem unteren Trum 192, welches sich in einer zur Förderrichtung 140 entgegengesetzten Rücklaufrichtung 190 bewegt.

Die Förderkette 186 setzt sich aus längs der Längsrichtung der Förderkette 186 aufeinanderfolgenden Kettenlaschen 194, 196 zusammen, welche einander paarweise symmetrisch zu einer Längsmittelebene 198 der Förderkette 186 gegenüberliegen.

Einige der inneren Kettenlaschen 194 sind als Winkelelemente mit einem horizontalen Schenkel 234 ausgebildet, welche mittels geeigneter Befestigungsmittel lösbar an einem Transportwagen 236 festgelegt sind. Der Transportwagen 236 umfaßt einen Grundkörper 238 mit einem Querschnitt in Form eines umgekehrten U, welcher die Förderkette 186 umgreift.

An den beiden vertikalen Schenkeln 240 des Grundkörpers 238 sind jeweils zwei Tragrollen 200 drehbar gelagert.

Die Oberseite des Grundkörpers 238 bildet zusammen mit auf der Oberseite angeordneten, sich in der Längsrichtung der Förderketten 186 erstreckenden vertikalen Führungsplatten 210 eine Aufnahme 212 für eine Skidkufe 104 eines mittels des Schleppkettenförderers 232 zu transportierenden Skidrahmens 100.

Die Tragrollen 200 der Transportwagen 236 rollen auf zwei Laufschienen 228 für das obere Trum 188 bzw. auf zwei Laufschienen 230 für das untere Trum 192 der Förderkette 186 ab, die innerhalb eines Kettengehäuses 214 des Schleppkettenförderers 232 gehalten sind.

Eine der Längsmittelebene des Schleppkettenförderers 232 zugewandte Innenwand 242 des Kettengehäuses 214 trägt an ihrem oberen Ende ein Abdeckblech 244, das sich längs der Förderrichtung 140 erstreckt und einen im wesentlichen Z-förmigen Querschnitt aufweist, mit einem vertikalen unteren Abschnitt 246, einem horizontalen mittleren Abschnitt 248 und einem vertikalen oberen Abschnitt 250, der sich über einen unter einem Winkel von beispielsweise ungefähr 45° gegen die Horizontale geneigten Abschnitt 254 nach außen an den horizontalen mittleren Abschnitt 248 anschließt.

Der vertikale obere Abschnitt 250 und der geneigte Abschnitt 252 bilden zusammen einen unteren inneren Abdeckbereich 160 für die Skidkufe 104.

Das obere Ende des unteren inneren Abdeckbereichs 160 erstreckt sich nach oben in den Zwischenraum 158 zwischen der Innenseite 124 der Skidkufe 104 und dem mittleren Abschnitt 122 der Stütze 106 hinein.

Eine der Längsmittelebene des Schleppkettenförderers 232 abgewandte Außenwand 254 des Kettengehäuses 214 erstreckt sich nach oben bis über die Auflagefläche 105 der Skidkufe 104 hinaus und bildet einen unteren äußeren Abdeckbereich 216 für die Skidkufe 104.

An der Außenseite des unteren äußeren Abdeckbereichs 216 ist ein Scharnier 164 mit einer längs der Förderrichtung 140 verlaufenden Schwenkachse angeordnet, mittels dessen ein schwenkbarer Teil 154 der Abdeckung 150 für die Skidkufe 104 aus der in Fig. 8 in gebrochenen Linien dargestellten Wartungsstellung in die in Fig. 8 hindurchgezogenen Linien dargestellte Arbeitsstellung schwenkbar ist.

Der schwenkbare Teil 154 der Abdeckung 150 umfaßt einen oberen äußeren Abdeckbereich 220, welcher sich in der Betriebsstellung vertikal nach oben bis ungefähr zur Mitte der Skidkufe 104 erstreckt.

An den oberen Rand des oberen äußeren Abdeckbereichs 220 schließt sich längs einer Biegelinie 168 ein oberer Abdeckbereich 170 an, welcher zur Innenseite des Schleppkettenförderers 232 hin unter einem Winkel von beispielsweise ungefähr 30° gegen die Horizontale ansteigt und sich in den Zwischenraum 172 zwischen dem äußeren Abschnitt 118 der Stütze 106 und der Unterseite der Traverse 108 des Skidrahmens 100 hineinerstreckt.

An den inneren Rand des oberen Abdeckbereichs 170 schließt sich längs einer Biegelinie 174 ein oberer innerer Abdeckbereich 176 an, welcher sich vertikal nach unten in den Zwischenraum 178 zwischen dem mittleren Abschnitt 122 und dem inneren Abschnitt 132 der Stütze 106 hineinerstreckt.

Der untere Rand des oberen inneren Abdeckbereichs 176 liegt unterhalb des oberen Randes des unteren inneren Abdeckbereichs 160, so daß zwischen dem oberen inneren Abdeckbereich 176 und dem unteren inneren Abdeckbereich 160 ein Durchlaß 180 zu dem Innenraum 182 der Abdeckung 150 ausgebildet ist, welcher vertikale Begrenzungswände aufweist und dessen Einlaßöffnung 183 nach unten gerichtet ist.

Ferner umfaßt die Abdeckung 150 ein Abstützelement 222 mit einem vertikalen unteren Abschnitt 224 und einem oberen Abschnitt 226, der unter im wesentlichen demselben Winkel gegen die Horizontale geneigt ist wie der obere Abdeckbereich 170 des schwenkbaren Teils 154 der Abdeckung 150, so daß in der Arbeitsstellung der Abdeckung 150 der obere Abdeckbereich 170 mit seiner Unterseite an der Oberseite des oberen Abschnitts 226 des Abstützelements 222 aufliegt.

Das Abdeckblech 244 und der untere äußere Abdeckbereich 216 sowie das Abstützelement 222 bilden zusammen einen stationären Teil 152 der Abdeckung 150.

Der von dem stationären Teil 152 und dem schwenkbaren Teil 154 in der Betriebsstellung umschlossene Innenraum 182 enthält außer der Skidkufe 104 auch die beweglichen Teile des Schleppkettenförderers 232, insbesondere die Förderkette 186 mit den Transportwagen 236, so daß alle diese Elemente durch die Abdeckung 150 vor Verschmutzung geschützt sind.

Im Betriebszustand der Abdeckung 150 deckt der obere innere Abdeckbereich 176 den oberen Bereich der Skidkufe 104 zur Innenseite des Schleppkettenförderers 232 hin ab. Der obere Abdeckbereich 170 deckt die Skidkufe 104 nach oben und den oberen Bereich der Skidkufe 104 zur Außenseite des Schleppkettenförderers 232 hin ab. Der obere äußere Abdeckbereich 220 deckt den unteren Bereich der Skidkufe 104 zur Außenseite des Schleppkettenförderers 232 hin ab. Der untere äußere Abdeckbereich 216 deckt den unteren Bereich der Skidkufe 104 zur Außenseite des Schleppkettenförderers 232 hin ab. Der untere innere Abdeckbereich 160 deckt den unteren Bereich der Skidkufe 104 zur Innenseite des Schleppkettenförderers 232 hin ab.

Ferner deckt der untere Bereich des oberen inneren Abdeckbereichs 176 den oberen Bereich des unteren inneren Abdeckbereichs 160 zur Innenseite des Schleppkettenförderers 232 hin ab.

Um die im Kettengehäuse 214 angeordneten Elemente des Schieppkettenförderers 232 warten zu können, kann der schwenkbare Teil 154 der Abdeckung 150 ( bei entfernten Skidrahmen 100) um die Schwenkachse des Scharniers 164 in die in Fig. 8 in gebrochenen Linien dargestellte Wartungsstellung geschwenkt werden, in welcher der Innenraum 182 des Kettengehäuses 214 von oben zugänglich ist.

Beim Zurückschwenken des schwenkbaren Teils 154 in die Betriebsstellung dient der obere Abschnitt 226 des Abstützelements 222 als Anschlag für den schwenkbaren Teil 154.

## Patentansprüche

1. Fördervorrichtung zum Fördern von Werkstücken, insbesondere von Fahrzeugkarosserien, die jeweils auf einem Skidrahmen (100) mit Skidkufen (104) angeordnet sind, längs einer Förderrichtung (140),
**dadurch gekennzeichnet,**
**daß** die Fördervorrichtung (138, 184, 232) eine Abdeckung (150) für mindestens eine der Skidkufen (104) umfaßt, die einen oberen Abdeckbereich (170) aufweist, welcher im Betriebszustand der Fördervorrichtung (138, 184, 232) mindestens eine der Skidkufen (104) zumindest teilweise nach oben hin abdeckt.

2. Fördervorrichtung nach Anspruch 1, **dadurch gekennzeichnet, daß** der obere Abdeckbereich (170) mindestens eine der Skidkufen (104) vollständig nach oben hin abdeckt.

3. Fördervorrichtung nach einem der Ansprüche 1 oder 2, **dadurch gekennzeichnet, daß** der obere Abdeckbereich (170) im Betriebszustand der Fördervorrichtung (138, 184, 232) gegenüber der Horizontalen, vorzugsweise um einen Winkel von ungefähr 20° bis ungefähr 40°, geneigt ist.

4. Fördervorrichtung nach einem der Ansprüche 1 bis 3, **dadurch gekennzeichnet, daß** sich der obere Abdeckbereich (170) in einen Zwischenraum (172) zwischen der Skidkufe (104) und einer Traverse (108) des Skidrahmens (100) hineinerstreckt.

5. Fördervorrichtung nach einem der Ansprüche 1 bis 4, **dadurch gekennzeichnet, daß** die Abdeckung (150) einen äußeren Abdeckbereich (166; 216, 220) aufweist, welcher mindestens eine der Skidkufen (104) zumindest teilweise zur Außenseite der Fördervorrichtung (138, 184, 232) hin abdeckt.

6. Fördervorrichtung nach Anspruch 5, **dadurch gekennzeichnet, daß** der äußere Abdeckbereich (166; 216, 220) mindestens eine der Skidkufen (104) zur Außenseite der Fördervorrichtung (138, 184, 232) hin vollständig abdeckt.

7. Fördervorrichtung nach einem der Ansprüche 5 oder 6, **dadurch gekennzeichnet, daß** der äußere Abdeckbereich (166; 216, 220) im Betriebszustand der Fördervorrichtung (138, 184, 232) im wesentlichen vertikal ausgerichtet ist.

8. Fördervorrichtung nach einem der Ansprüche 1 bis 7, **dadurch gekennzeichnet, daß** die Abdeckung (150) einen inneren Abdeckbereich (160, 176) aufweist, welcher mindestens eine der Skidkufen (104) zumindest teilweise zur Innenseite der Fördervorrichtung (138, 184, 232) hin abdeckt.

9. Fördervorrichtung nach Anspruch 8, **dadurch gekennzeichnet, daß** die Abdeckung (150) einen oberen inneren Abdeckbereich (176), welcher mit dem oberen Abdeckbereich (170) verbunden ist, und einen unteren inneren Abdeckbereich (160), welcher von dem oberen inneren Abdeckbereich (176) und dem oberen Abdeckbereich (170) getrennt ist, aufweist.

10. Fördervorrichtung nach Anspruch 9, **dadurch gekennzeichnet, daß** einer der inneren Abdeckbereiche (160, 176) den jeweils anderen der inneren Abdeckbereiche (160, 176) zur Innenseite der Fördervorrichtung (138, 184, 232) hin zumindest teilweise abdeckt.

11. Fördervorrichtung nach einem der Ansprüche 9 oder 10, **dadurch gekennzeichnet, daß** der obere innere Abdeckbereich (176) den unteren inneren Abdeckbereich (160) zur Innenseite der Fördervorrichtung (138, 184, 232) hin zumindest teilweise abdeckt.

12. Fördervorrichtung nach einem der Ansprüche 9 bis 11, **dadurch gekennzeichnet, daß** der obere Abdeckbereich (170) den unteren inneren Abdeckbereich (160) zumindest teilweise nach oben hin abdeckt.

13. Fördervorrichtung nach einem der Ansprüche 9 bis 12, **dadurch gekennzeichnet, daß** mindestens einer der inneren Abdeckbereiche (160, 176) im Betriebszustand der Fördervorrichtung (138, 184, 232) im wesentlichen vertikal ausgerichtet ist.

14. Fördervorrichtung nach Anspruch 13, **dadurch gekennzeichnet, daß** beide inneren Abdeckbereiche (160, 176) im Betriebszustand der Fördervorrichtung (138, 184, 232) im wesentlichen vertikal ausgerichtet sind.

15. Fördervorrichtung nach einem der Ansprüche 1 bis 14, **dadurch gekennzeichnet, daß** die Abdeckung (150) einen Durchlaß (180) für den Durchtritt mindestens einer Stütze (106) mindestens einer Skidkufe (104) des Skidrahmens (100) aufweist.

16. Fördervorrichtung nach Anspruch 15, **dadurch gekennzeichnet, daß** der Durchlaß (180) eine nach unten, vorzugsweise im wesentlichen vertikal nach unten, weisende Einlaßöffnung (183) aufweist.

17. Fördervorrichtung nach einem der Ansprüche 1 bis 16, **dadurch gekennzeichnet, daß** zumindest der obere Abdeckbereich (170) der Abdeckung (150) aus einer Arbeitsstellung, in welcher der obere Abdeckbereich (170) mindestens eine der Skidkufen (104) nach oben hin zumindest teilweise abdeckt, in eine Wartungsstellung bewegbar ist, in welcher der Förderweg der mindestens einen Skidkufe (104) zugänglich ist.

18. Fördervorrichtung nach Anspruch 17, **dadurch gekennzeichnet, daß** der obere Abdeckbereich (170) aus der Arbeitsstellung in die Wartungsstellung schwenkbar ist.

19. Fördervorrichtung nach Anspruch 18, **dadurch gekennzeichnet, daß** der obere Abdeckbereich (170) um eine im wesentlichen parallel zu der Förderrichtung (140) gerichtete Schwenkachse aus der Arbeitssteliung in die Wartungsstellung schwenkbar ist.

20. Fördervorrichtung nach einem der Ansprüche 1 bis 19, **dadurch gekennzeichnet, daß** die Fördervorrichtung als eine Rollenbahn (138), als ein Tragkettenförderer (184) oder als ein Schleppkettenförderer (232) ausgebildet ist.

21. Skidrahmen zum Fördern von Werkstücken, insbesondere Fahrzeugkarosserien, umfassend mindestens zwei Skidkufen (104), die quer zur Förderrichtung (140) voneinander beabstandet sind, und mindestens eine Traverse (108), die über jeweils eine Stütze (106) mit den Skidkufen (104) verbunden ist, wobei die Stütze (106) an einem Festlegebereich (114) an der jeweiligen Skidkufe (104) festgelegt ist, **dadurch gekennzeichnet, daß** die Stütze (106) einen nach oben offenen bogenförmigen Abschnitt (134) umfaßt.

22. Skidrahmen nach Anspruch 21, **dadurch gekennzeichnet, daß** die Stütze (106) einen schwanenhalsförmigen Abschnitt (136) umfaßt.

23. Skidrahmen nach einem der Ansprüche 21 oder 22, **dadurch gekennzeichnet, daß** die Stütze (106) mindestens einen Abschnitt (122, 128) umfaßt, der unterhalb des Festlegebereichs (114) der Stütze (106) angeordnet ist.

24. Skidrahmen nach einem der Ansprüche 21 bis 23, **dadurch gekennzeichnet, daß** die Stütze (106) an einer Oberseite (116) der jeweiligen Skidkufe (106) festgelegt ist.

25. Skidrahmen nach einem der Ansprüche 21 bis 24, **dadurch gekennzeichnet, daß** die Stütze (106) einen sich von dem Festlegebereich (114) aus quer zur Vertikalen, vorzugsweise im wesentlichen horizontal, erstreckenden äußeren Abschnitt (118) umfaßt.

26. Skidrahmen nach einem der Ansprüche 21 bis 25, **dadurch gekennzeichnet, daß** die Stütze (106) einen sich von der Traverse (108) aus quer zur Horizontalen, vorzugsweise im wesentlichen vertikal, erstreckenden inneren Abschnitt (132) umfaßt.

27. Skidrahmen nach Anspruch 26, **dadurch gekennzeichnet, daß** die Stütze (106) einen zwischen dem Festlegebereich (114) und dem inneren Abschnitt (132) angeordneten, sich quer zur Horizontalen, im wesentlichen vertikal, erstreckenden mittleren Abschnitt (122) umfaßt.

28. Skidrahmen nach einem der Ansprüche 21 bis 27, **dadurch gekennzeichnet, daß** die Stütze (106) einen zwischen dem Festlegebereich (114) und dem inneren Abschnitt (132) angeordneten, sich quer zur Vertikalen, vorzugsweise im wesentlichen horizontal, erstreckenden und unterhalb des Festlegebereichs (114) angeordneten unteren Abschnitt (128) umfaßt.
